# EUROPEAN PATENT SPECIFICATION

(11) **EP 2 125 487 B1**
(45) Date of publication and mention of the grant of the patent: **18.03.2015**
(21) Application number: 08712812.0
(22) Date of filing: 15.02.2008
(51) Int. Cl.: B62D 1/187, B62D 1/184, B62D 1/18

(54) **VEHICLE STEERING COLUMN**
LENKSÄULE FÜR EIN FAHRZEUG
COLONNE DE DIRECTION DE VÉHICULE

(30) Priority: 23.02.2007 SE 0700454
(43) Date of publication of application: 02.12.2009
(73) Proprietor: Scania CV AB (publ), 151 87 Södertälje (SE)
(72) Inventor: SKEPPSTRÖM, Tomas, S-155 34 NYKVARN (SE)
(86) International application number: PCT/SE2008/050182
(87) International publication number: WO 2008/103121

(56) References cited:
- US-A- 4 656 888
- US-A- 6 068 295
- US-A1- 2007 029 771

## Description

### TECHNICAL FIELD

The invention relates to a vehicle steering column settable in a vertical plane, comprising a bearing housing for connection to a cab structure, a slide supported for movement in the bearing housing, a steering wheel shaft housing connected to one end of the slide and a releasable lock for locking the slide to the bearing housing.

### BACKGROUND

Such steering columns are known in many different variants, e.g. a known practice from US-A-4656888 and US-A-6186547 is for the steering column to be supported for sliding in link mechanisms with elongate grooves to provide freedom of movement in different directions. A further steering column is disclosed in the application US 2007/0029771.

### SUMMARY OF THE INVENTION

An object of the invention is to further develop a steering column of the kind indicated in the introduction so that it may be compact and universally settable with a small number of movable parts.

According to a version of the invention, the slide comprises a pair of slide elements which are movable relative to one another and are articulatedly connected to the steering wheel shaft housing.

This makes it easy, using only a few components, for the steering column, with a great amount of freedom, to be simultaneously both moved in a linear manner and pivoted to various positions in a vertical plane. The articulated connection between the slide elements and the steering wheel shaft housing also brings the varying centre of rotation of the pivoting movement closer to the driver, making it possible to save space and provide a greater feeling of freedom during steering wheel setting.

According to an embodiment of the invention, although the slide elements may be articulatedly connected to one another in some other way, one slide element is articulatedly connected to the steering wheel shaft housing via a single articulation and the other slide element is articulatedly connected to the steering wheel shaft housing via a link.

According to an embodiment of the invention, the slide is also supported for pivoting in the bearing housing. This is a simple way of providing the steering wheel shaft housing with a further degree of freedom by using a small number of components. The steering wheel shaft housing can thus not only 1) be pivoted and 2) be moved in a linear manner relative to the pivot bearing housing to any desired positions in a vertical circular ring sector but can at the same time also 3) be traversed or execute rotation movements about any desired axes in the universal vertical plane when the slide elements are moved in a linear manner relative to one another. For example, the steering wheel then no longer forcibly guides the driver's wrists during raising and lowering of the steering wheel, and the driver can use his/her wrists to determine the steering wheel angle for him/herself during the setting process. This may provide a completely new feeling of freedom during steering wheel setting.

The slide may then be supported for linear movement in a transverse aperture in a shaft journal supported for pivoting in the pivot bearing housing. The result is a very simple configuration for the degrees of freedom in both linear movement and pivoting of the steering column.

According to a further embodiment, the shaft journal comprises a pair of shaft sections which are diametrically separable from one another, the lock for said locking being adapted to pushing the slide elements apart for locking engagement with the shaft sections, which are then pressed apart to locking engagement with the pivot bearing housing. Both the pivoting movement and the linear movement can thus be locked by a single lock.

The lock may be at least one locking wedge insertable between the slide elements.

The lock may also be an eccentric rotatable between the slide elements.

Other features and advantages of the invention may be indicated by the claims and the following description of embodiment examples.

### BRIEF DESCRIPTION OF THE DRAWINGS

FIG. 1 is a simplified side view of an upper steering column according to a first embodiment of the invention in a setting position;
FIG. 2 is a view corresponding to FIG. 1 of an upper steering column according to a second embodiment of the invention;
FIG. 3 is a view, as seen from above and partly in section, of an upper steering column according to FIG. 2 in another setting position;
FIG. 4 is a view, as seen from above, of the steering column according to FIG. 2 in yet another setting position; and
FIG. 5 is a view, as seen from above and partly in section of an alternative embodiment of a steering column according to the invention in a further setting position.

In the various drawings, items with mutually similar functions have the same reference numbers throughout.

### DETAILED DESCRIPTION OF EMBODIMENT EXAMPLES

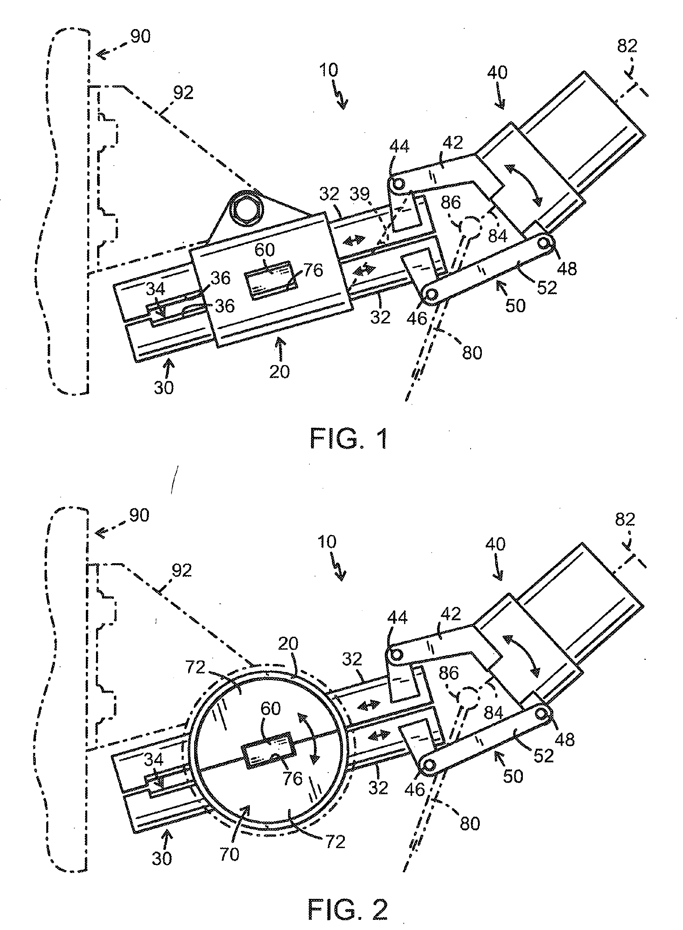

The upper steering columns 10 depicted in FIGS. 1 and 2 are intended to be firmly connected in a conventional manner to a cab structure 90 of a vehicle by a bracket 92. Through a schematically depicted steering wheel 82 with a steering wheel shaft 84 supported for rotation in a steering wheel shaft housing 40, the upper steering column 10 is further connected, also in a conventional manner, via a universal coupling 86 to a telescopic lower steering column 80.

In the embodiment according to FIG. 1, the steering column 10 is supported for linear movement relative to the bracket 92 via a bearing housing 20 which in the example depicted takes the form of a slide bearing bushing firmly connected to the bracket 92.

The bearing housing 20 has a pair of mutually opposite central recesses 76 (only one is depicted in FIG. 1) each accommodating a wedge 60. The slide 30 is divided axially into two slide elements 32, 32. Each slide element 32 further has an elongate recess 34 with a pair of mutually opposite, mutually angled and planar ramp surfaces 36, 36. In the assembled state depicted, the wedges 60 engage with the ramp surfaces 36 from opposite sides of the bearing housing 20 in order to lock/release the steering column 10 relative to the bearing housing 20. More specifically, the wedges 60 constitute a lock whereby in a locking position they press the respective slide elements 32 to frictionally locking engagement with the inside of the bearing housing 20.

The wedges 60 may in an undepicted manner be connected to a mechanism which either manually or by a push-button operated actuator pushes the wedges 60 to the locking and releasing positions. The wedges 60 may also be spring-loaded to either of these positions. Many variations are possible, e.g. it may be sufficient in an undepicted modified embodiment to use only one wedge. Locking means other than wedges are also possible within the scope of the invention.

As indicated above, the slide 30 is articulatedly connected to the steering wheel shaft housing 40. In the embodiment examples depicted, although other articulated connections are possible, the upper slide element 32 is articulatedly connected via a single articulation 44 to a hinge arm 42 of the steering wheel shaft housing 40, while the lower slide element 32 is connected to the steering wheel shaft housing 40 by a link 50 which comprises two link arms 52 (only one is depicted in FIG. 1) and associated articulations 46, 48. The link 50 may also in an undepicted manner be formed integrally to reduce play and to keep down the number of components for the steering column 10. This arrangement makes it possible for the steering wheel shaft housing 40 to be pivoted and moved in a linear manner relative to the pivot bearing housing 20, as indicated by the arrows in FIG. 1, by relative movement between the slide elements 32, 32 which guide the articulated connection to the steering wheel shaft housing 40. To provide sufficient space for the lower steering column 80 and the universal joint 86 it is of course possible for the hinge arm 42 and the link 50 to be made longer. The slides 32, 32 may also have, for example, an inner cylindrical recess 39 as indicated in FIG. 1.

The steering column 10 may, by an undepicted spring arrangement with, for example, tension springs and/or torsion springs, be kept preloaded to a normal position which is assumed by a steering wheel under no load when the lock 60 is released.

In the embodiments according to FIGS. 2-5, the bearing housing 20 takes the form of a pivot bearing housing to provide the steering column 10 with, in addition to linear movability, a further degree of freedom, viz. a further pivoting function.

The bearing housing 20 in this case takes the form of a transverse pivot bearing bushing which is firmly connected to the bracket 92 and in which a shaft journal 70 is pivotably supported.

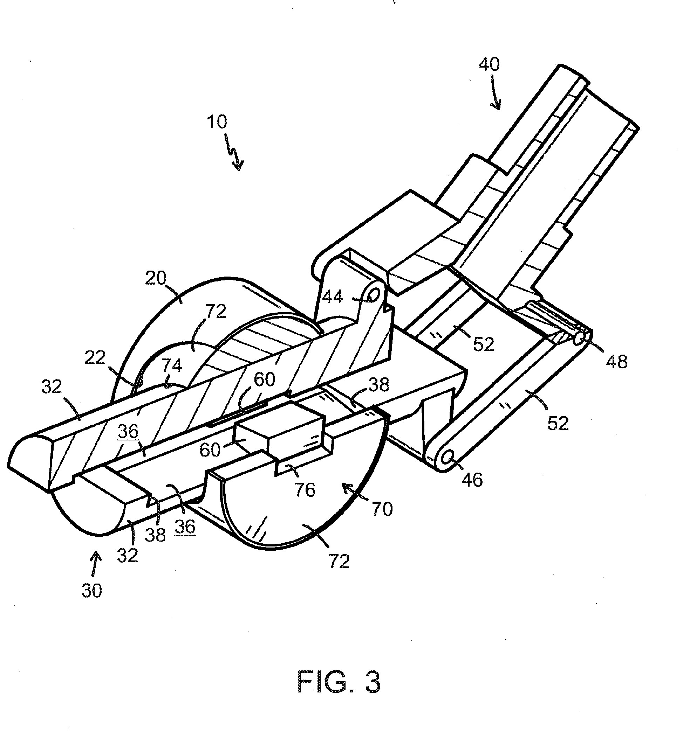

As illustrated in more detail in FIG. 3, the two slide elements 32, 32 of the slide 30 are supported for movement in the transverse aperture 74 in the shaft journal 70.

In this case the shaft journal 70 is also divided axially into two shaft sections 72, 72 in a plane approximately in common with the parting plane between the slide elements 32, 32.

Each shaft section 72 has a central recess 76 (FIG. 2) which accommodates a wedge 60. Each slide element 32 has, as before, a corresponding elongate recess 34 with a pair of mutually opposite, mutually angled and planar ramp surfaces 36. In the assembled state depicted, the wedges 60 engage with the ramp surfaces 36 from opposite sides of the shaft journal 70 in order to lock/release the steering column 10 relative to the pivot bearing housing 20. More specifically, the wedges 60 constitute a lock whereby in a locking position they press each slide element 32 to locking engagement with the aperture 74 (FIG. 3) in the shaft journal 70, and each slide element 32 itself pushes each shaft journal 72 to frictionally locking engagement with the pivot bearing housing 20.

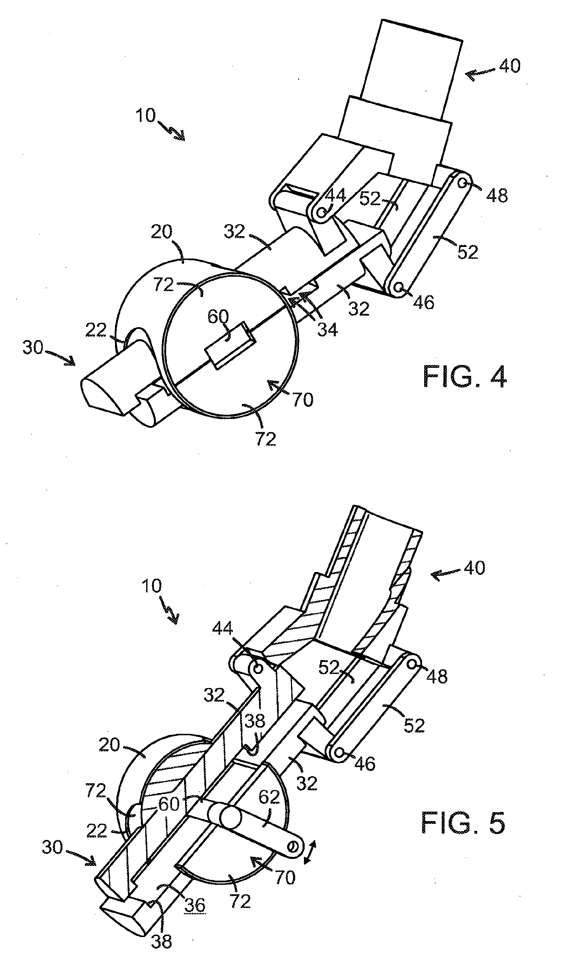

As mentioned above, locking means other than wedges may be used, e.g. an eccentric 60 depicted in FIG. 5 may be used as locking means. In this case, the eccentric 60 is supported for pivoting in the shaft journal 70 and may have a lever 62 for locking/releasing the steering column 10 relative to the pivot bearing housing 20 by manual action or by actuator. The elongate recesses 34 (FIG. 4) may then each have a planar engagement surface 36 (only one appears in FIG. 5) for the eccentric 60.

The elongate recesses 34 are delineated in the longitudinal direction by mutually opposite impact surfaces 38 (FIG. 5) which limit the linear movement of the slide elements 32 in the pivot bearing housing 20. The pivoting movement of the slide elements 32 is limited by an elongate peripheral aperture 22 in the pivot bearing housing 20.

Many variations are possible. If the steering wheel shaft housing 40 needs only to be pivotable, the slide elements 32, 32 may be unilaterally movable relative to one another, i.e. one or other of the slide elements 32, 32 may then be firmly connected to or integral with the bearing housing 20 (not depicted).

The description set out above is primarily intended to facilitate comprehension and no limitations of the invention are to be inferred therefrom. The modifications which will be obvious to one skilled in the art from perusing the description may be implemented without departing from the scope of the claims set out below.

## Claims

1. A vehicle steering column (10) settable in a vertical plane, comprising
a bearing housing (20) for connection to a cab structure (90);
a slide (30) supported for linear movement in the bearing housing (20);
a steering wheel shaft housing (40) connected to one end of the slide; and
a releasable lock (60) for locking the slide (30) to the bearing housing (20);
**characterised in that**
the slide (30) comprises a pair of slide elements (32, 32) movable relative to one another and articulatedly connected to the steering wheel shaft housing (40).

2. A steering column according to claim 1, in which one slide element (32) is articulatedly connected to the steering wheel shaft housing 40 via a single articulation (44) and the other slide element (32) is articulatedly connected to the steering wheel shaft housing (40) via a link (50).

3. A steering column according to claim 1 or 2, in which the slide (30) is also supported for pivoting in the bearing housing (20).

4. A steering column according to claim 3, in which the slide (30) is supported for pivoting in a transverse aperture (74) in a shaft journal (70) which is itself supported for pivoting in the pivot bearing housing (20).

5. A steering column according to claim 4, in which the shaft journal (70) comprises a pair of mutually diametrically separable shaft sections (72, 72) and the lock (60) for said locking is adapted to pressing the slide elements (32, 32) apart to locking engagement with the shaft sections (72, 72), which are thus pressed apart to locking engagement with the pivot bearing housing (20).

6. A steering column according to any one of the foregoing claims, in which the lock comprises at least one locking wedge (60) insertable between the slide elements (32, 32).

7. A steering column according to any one of the foregoing claims, in which the lock comprises an eccentric (60) rotatable between the slide elements (32, 32).

## Patentansprüche

1. Fahrzeuglenksäule (10), die in einer vertikalen Ebene einstellbar ist, umfassend
ein Lagergehäuse (20) zum Verbinden mit einer Kabinenstruktur (90),
eine zum linearen Bewegen in dem Lagergehäuse (20) gelagerte Gleitkomponente (30),
ein mit einem Ende der Gleitkomponente verbundenes Lenkradwellengehäuse (40), und
eine lösbare Sperrvorrichtung (60) zum Verriegeln der Gleitkomponente (30) mit dem Lagergehäuse (20),
**dadurch gekennzeichnet, dass**
die Gleitkomponente (30) ein Paar Gleitelemente (32, 32) umfasst, die relativ zueinander beweglich sind und mit dem Lenkradwellengehäuse (40) gelenkig verbunden sind.

2. Fahrzeuglenksäule nach Anspruch 1, wobei ein Gleitelement (32) über ein einzelnes Gelenk (44) mit dem Lenkradwellengehäuse (40) gelenkig verbunden ist und das andere Gleitelement (32) mit dem Lenkradwellengehäuse (40) über ein Bindeglied (50) gelenkig verbunden ist.

3. Fahrzeuglenksäule nach einem der Ansprüche 1 oder 2, wobei die Gleitkomponente (30) auch zum Schwenken in dem Lagergehäuse (20) gelagert ist.

4. Fahrzeuglenksäule nach Anspruch 3, wobei die Gleitkomponente (30) zum Schwenken in einer Queröffnung (74) in einem Wellenzapfen (70) gelagert ist, wobei der Wellenzapfen (70) selbst zum Schwenken in dem Schwenklagergehäuse (20) gelagert ist.

5. Fahrzeuglenksäule nach Anspruch 4, wobei der Wellenzapfen (70) ein Paar voneinander diametral trennbare Wellenbereiche (72, 72) umfasst, und wobei die Sperrvorrichtung (60) für das Verriegeln dazu eingerichtet ist, die Gleitelemente (32, 32) auseinanderzudrücken, um mit den Wellenbereichen (72, 72) in Eingriff gebracht zu werden, wodurch diese auseinandergedrückt werden, um mit dem Drehlagergehäuse (20) in Eingriff gebracht zu werden.

6. Fahrzeuglenksäule nach einem der vorangegangenen Ansprüche, wobei die Sperrvorrichtung zumindest einen zwischen die Gleitelemente (32, 32) einsetzbaren Sperrkeil (60) aufweist.

7. Fahrzeuglenksäule nach einem der vorangegangenen Ansprüche, wobei die Sperrvorrichtung einen zwischen den Gleitelementen (32, 32) drehbaren Exzenter (60) aufweist.

## Revendications

1. Colonne de direction de véhicule (10) pouvant être disposée dans un plan vertical, comprenant :
un boîtier de palier (20) pour la liaison à une structure de cabine (90) ;
une coulisse (30) supportée pour un mouvement linéaire dans le boîtier de palier (20) ;
un boîtier d'arbre de volant de direction (40) relié à une extrémité de la coulisse ; et
un verrou libérable (60) pour verrouiller la coulisse (30) au boîtier de palier (20) ;
**caractérisée en ce que** :
la coulisse (30) comprend une paire d'éléments de coulisse (32, 32) pouvant se déplacer l'un par rapport à l'autre et reliés de façon articulée au boîtier d'arbre de volant de direction (40).

2. Colonne de direction selon la revendication 1, dans laquelle un élément de coulisse (32) est relié de façon articulée au boîtier d'arbre de volant de direction (40) par l'intermédiaire d'une articulation unique (44), et en ce que l'autre élément de coulisse (32) est relié de façon articulée au boîtier d'arbre de volant de direction (40) par l'intermédiaire d'une liaison (50).

3. Colonne de direction selon la revendication 1 ou 2, dans laquelle la coulisse (30) est également supportée de façon à pivoter dans le boîtier de palier (20).

4. Colonne de direction selon la revendication 3, dans laquelle la coulisse (30) est supportée de façon à pivoter dans une ouverture transversale (74) dans un pivot d'arbre (70), qui est lui-même supporté de façon à pivoter dans le boîtier de palier de pivot (20).

5. Colonne de direction selon la revendication 4, dans laquelle le pivot d'arbre (70) comprend une paire de sections d'arbre mutuellement diamétralement séparables (72, 72), et le verrou (60) pour ledit verrouillage est adapté de façon à presser les éléments de coulisse (32, 32) de façon à les écarter l'un de l'autre pour une prise de verrouillage avec les sections d'arbre (72, 72), qui sont par conséquent pressées de façon à s'écarter l'une de l'autre pour une prise de verrouillage avec le boîtier de palier de pivot (20).

6. Colonne de direction selon l'une quelconque des revendications précédentes, dans laquelle le verrou comprend au moins un coin de verrouillage (60) pouvant être inséré entre les éléments de coulisse (32, 32).

7. Colonne de direction selon l'une quelconque des revendications précédentes, dans laquelle le verrou comprend un excentrique (60) pouvant tourner entre les éléments de coulisse (32, 32).
